# EUROPÄISCHE PATENTSCHRIFT

(11) **EP 3 557 735 B1**
(45) Veröffentlichungstag und Bekanntmachung des Hinweises auf die Patenterteilung: **12.02.2020**
(21) Anmeldenummer: 18168330.1
(22) Anmeldetag: 19.04.2018
(51) Int. Cl.: H02K 15/04, H02K 15/10, H02K 3/38

(54) **VERFAHREN UND VORRICHTUNG ZUM ISOLIEREN DER WICKELKÖPFE EINER WELLENWICKELMATTE**
METHOD AND A DEVICE FOR ISOLATING THE END WINDING OF A SHAFT ROLL MAT
PROCÉDÉ ET DISPOSITIF D'ISOLATION DES TÊTES D'ENROULEMENT D'UNE NATTE D'ARBRE D'ENROULEMENT

(43) Veröffentlichungstag der Anmeldung: 23.10.2019
(73) Patentinhaber: Aumann Espelkamp GmbH, 32339 Espelkamp (DE)
(72) Erfinder: Lüttge, Wolfgang, DE - 31787 Hameln (DE)
(74) Vertreter: Schober, Mirko

(56) Entgegenhaltungen:
- WO-A2-2012/138303
- US-A- 4 588 916
- US-A1- 2015 171 693

## Beschreibung

Die Erfindung betrifft ein Verfahren zum Isolieren der Wickelköpfe einer Wellenwickelmatte nach dem Oberbegriff des Anspruchs 1 sowie eine Vorrichtung hierfür.

Bei der Herstellung von Wellenwickelmatten aus einer Mehrzahl Wellenwicklungen werden in aller Regel die Wickelköpfe mit einem Isolationsmaterial versehen, um Teilwicklungen voneinander im Bereich der Wickelköpfe gegeneinander zu isolieren, dies ist z.B. aus US 4,588,916 A bekannt. Üblicherweise wird nach dem Einbringen der Wicklung in ein Bauteil, z.B. in ein Statorblechpaket oder dergleichen, der aus dem Bauteil stirnseitig hervorstehende Wickelkopf händisch isoliert. Auch ist z.B. aus US 2015/171693 A1 bekannt, Isolationspapier um Wicklungen herum zu wickeln, um benachbarte Lagen voneinander zu isolieren. Bekannt ist zudem aus WO 2012/138303 A2, kleine Isolationselemente an den Kreuzungspunkten benachbarter Wickelwellen einzusetzen. Bei Hairpinwicklungen können auch Islolierschichten zwischen den einzelnen Segmenten eingebracht werden.

Aufgrund der wachsenden Anforderungen an Bauteile elektrischer Maschinen auch hinsichtlich der Reduzierung von Herstellungszeiten besteht Bedarf daran, den Prozess möglichst weitgehend zu automatisieren.

Aufgabe der vorliegenden Erfindung ist es daher, ein Verfahren und eine Vorrichtung zum Isolieren der Wickelköpfe einer Wellenwickelmatte zur Verfügung zu stellen, mit denen die Automatisierung des oben beschriebenen Prozesses möglich wird.

Gelöst wird diese Aufgabe durch ein Verfahren zum Isolieren der Wickelköpfe einer Wellenwickelmatte mit den Merkmalen des Anspruchs 1 sowie eine Vorrichtung zur Durchführung des Verfahrens mit den Merkmalen des Anspruchs 9. Vorteilhafte Ausführungsformen finden sich in den abhängigen Ansprüchen.

Das erfindungsgemäße Verfahren ermöglicht es, die noch in der Produktion befindliche, flach liegende Wellenwickelmatte bereits mit der nötigen Wickelkopfisolation oder mit einer gegebenenfalls notwendigen Isolation zwischen den Teilleitern in der späteren Nut zu versehen, bevor diese dann in ein Bauteil einer elektrischen Maschine eingebracht und kontaktiert wird. Es ist mit dem erfindungsgemäßen Verfahren also möglich, die Wellenwickelmatte gebrauchsfertig bereitzustellen, ohne dass nach dem Einbringen in ein Bauteil noch weitergehende händische Arbeitsschritte zur Isolation der Wickelköpfe durchgeführt werden müssen.

Beim erfindungsgemäßen Verfahren wird dazu eine Wellenwickelmatte mit einer Mehrzahl durch Umbiegen von Wickeldrähten erzeugten Wickelkopfabschnitten bereitgestellt. Wickelkopfabschnitte, die letztlich im nachher fertigen Bauteil - zum Beispiel im Rotor oder Stator einer elektrischen Maschine - die stirnseitig am Bauteil vorstehenden Wickelköpfe bilden, werden erfindungsgemäß durch Aufbringen eines Isolationselements, insbesondere eines Isolationspapiers oder einer Isolationsfolie oder eines bandförmigen Isolationselements, auf die Wickelkopfabschnitte gegeneinander in einem automatisierten Verfahren isoliert. Dazu werden folgende Schritte ausgeführt:
i) Transportieren der Wellenwickelmatte in einer Transportrichtung; die Wellenwickelmatte liegt bei dieser Vorgehensweise vorteilhafterweise flach;
ii) relatives Auseinanderbringen von zumindest benachbarten Wickelkopfabschnitten der Wellenwickelmatte,
iii) Einbringen eines Isolationselements zwischen die auseinandergebrachten Wickelkopfabschnitte,
iv) wieder Zusammenbringen der auseinander gebrachten Wickelkopfabschnitte.

Bei dem Isolationselement kann es sich um ein Einzelelement handeln, welches zur Isolierung lediglich eines Wickelkopfabschnittes ausgebildet ist. Es müssen dann im Laufe des Prozesses eine Mehrzahl solcher Einzelelemente in die Wellenwickelmatte eingebracht werden. Alternativ oder ergänzend kann auch vorgesehen sein dass das, bevorzugt aus Papier und/oder Folie ausgebildete, Isolationselement als bandförmiges Isolationselement vorliegt. Ein solches bandförmiges Isolationselement kann dann in einem kontinuierlichen Prozess durch sukzessives Auseinanderbringen bzw. Spreizen benachbarter Wickelkopfabschnitte eingebracht werden.

Nach einer vorteilhaften Variante kann das Auseinanderbringen der Wickelkopfabschnitte gemäß Schritt ii) durch Spreizen der Wellenwickelmatte erfolgen. Hierbei ist bevorzugt ein Spreizvorgang vorgesehen, der in einer Spreizrichtung senkrecht zur Transportrichtung erfolgt. Die flachliegende Wellenwickelmatte kann so einfach durch Angreifen an den Spitzen oder Scheitelpunkten benachbarter Wickelkopfabschnitte auseinandergedrückt werden. Auf diese Weise kann das Isolationselement beim Auseinanderdrücken in den entstehenden Zwischenraum eingeschoben werden. Durch die Eigenspannung des Drahtes der Wellenwickelmatte wird das Isolationselement nach Ende des Spreizvorganges bereits durch die Vorspannung der Wellenwickelmatte in der gewünschten Position gehalten.

Nach einer vorteilhaften Ausführungsform der vorliegenden Erfindung kann das Isolationselement auf einen Wickelkopfabschnitt aufgebracht, insbesondere aufgeklebt, werden. Es kann insbesondere hierzu vorgesehen sein, dass das Isolationselement selbstklebend ausgebildet ist. So kann auch erreicht werden, dass das Isolationselement auch dann in der richtigen Position verbleibt, wenn die Eigenspannung der Wellenwickelmatte ein Festklemmen nicht ohne weiteres sicherstellen kann.

Bevorzugt ist vorgesehen, dass das Isolationselement der Form des Wickelkopfabschnitts nachempfunden ist. Die Wickelkopfabschnitte haben üblicherweise eine etwa dreieckige Form, sodass auch die entsprechenden Isolationselemente, die in der Regel flache Teile sind, dreieckige oder trapezförmige Formen aufweisen können. Auf diese Weise wird sichergestellt, dass die Isolationselemente sich beim Einbringen weiterer Isolationselemente nicht gegenseitig behindern. Die Abmessungen, insbesondere die Höhe, der Isolationselemente berücksichtigt dabei die elektrisch notwendigen Luft- und Kriechstrecken.

Nach einer bevorzugten Variante des erfindungsgemäßen Verfahrens ist vorgesehen, dass die Schritte ii) bis iv) auf beiden in Transportrichtung verlaufenden Längsseiten der Wellenwickelmatte durchgeführt werden. So kann die Wellenwickelmatte in einem Durchlauf mit entsprechend isolierten Wickelköpfen ausgebildet werden.

Insbesondere kann vorgesehen sein, dass die Schritte ii) bis iv) wiederholt ausgeführt werden, sodass die gesamte Wellenwickelmatte in einem Durchlauf entsprechend isoliert werden kann. Bevorzugt wird dabei jeder einzelne Wickelkopfabschnitt mit einem entsprechenden Isolationselement versehen. Die Durchführung kann dabei sequentiell oder/und - um die Prozesszeit weiter zu minimieren - auch teilparallel durchgeführt werden.

Nach einer weiteren erfindungsgemäßen Ausführungsform kann auch vorgesehen sein, dass die Wellenwickelmatte in wenigstens einem Bereich zusammengedrückt wird, der bereits die Schritte ii) bis iv) durchlaufen oder noch nicht durchlaufen hat. Das Zusammendrücken kann einerseits dazu dienen, dass die Form der Wellenwickelmatte kompakt gehalten wird und andererseits die Isolationselemente sicher zwischen den einzelnen Wickelkopfabschnitten verbleiben.

Die Erfindung betrifft weiter eine Vorrichtung zur Durchführung eines Verfahrens zum Isolieren der Wickelköpfe einer Wellenwickelmatte, wobei es sich bei dem Verfahren insbesondere um ein solches handelt, welches oben beschrieben worden ist.

Die erfindungsgemäße Vorrichtung weist eine Transportvorrichtung auf, die eine Wellenwickelmatte in einer Transportrichtung transportiert bzw. vorschiebt, insbesondere axial führt und durch Schieben transportiert. Ferner ist an der erfindungsgemäßen Vorrichtung eine Spreizeinrichtung vorgesehen, die dazu ausgelegt ist, zumindest benachbarte Wickelkopfabschnitte der Wellenwickelmatte relativ zueinander zu bewegen und auseinanderzubringen. Weiter umfasst die erfindungsgemäße Vorrichtung eine Einbringeinrichtung, die dazu ausgelegt ist, ein Isolationselement zu greifen und in einen Bereich zwischen den durch die Spreizeinrichtung auseinandergebrachten Wickelabschnitten einzubringen.

Nach einer vorteilhaften Ausführungsform ist vorgesehen, dass die Vorrichtung zwei der oben beschriebenen Spreizeinrichtungen umfasst. Die erste Spreizeinrichtung ist dabei auf der einen Seite der Transportvorrichtung und die zweite Spreizeinrichtung auf gegenüberliegenden Seite der Transportvorrichtung angeordnet. So ist es möglich, die Wellenwickelmatte auf beiden Seiten mit entsprechenden Isolationselementen zu versehen. Es ist dann nur ein Arbeitsgang, nämlich der Transport der Wellenwickelmatte durch die erfindungsgemäße Vorrichtung, erforderlich, um die Wickelköpfe vollständig zu isolieren.

Weiter ist von Vorteil, dass die erfindungsgemäße Vorrichtung zwei oben beschriebene Einbringeinrichtung umfasst, wobei die erste Einbringeinrichtungen auf der einen Seite der Transportvorrichtung und die zweite Einbringeinrichtung auf gegenüberliegenden Seite der Transportvorrichtung angeordnet ist.

Natürlich ist es auch möglich, das erfindungsgemäße Verfahren oder die erfindungsgemäße Vorrichtung so auszugestalten, dass mit lediglich einer Spreizeinrichtung und/oder einer Einbringeinrichtung ein beidseitiges Bestücken der Wellenwickelmatte mit Isolationselementen erreicht wird. Die Einrichtungen müssten dann - beispielsweise über einen Roboter - an die Längsseite der Wellenwickelmatte auf beiden Seiten angreifen können.

Nach einer weiteren vorteilhaften Ausführungsform der vorliegenden Erfindung kann auch vorgesehen sein, dass die bzw. jede Einbringeinrichtung zumindest in einer Richtung quer zur Transportrichtung in den Bereich der Wellenwickelmatte zustellbar ist. Im einfachsten Fall kann dafür ein gesteuerter Linearantrieb eingesetzt werden.

Schließlich kann weiter vorgesehen sein, dass die erfindungsgemäße Vorrichtung wenigstens eine Presseinrichtung, bevorzugt je wenigstens eine Presseinrichtung auf jeder Seite der Transporteinrichtung, umfasst. Die mindestens eine Presseinrichtung ist dabei dazu ausgelegt, die Wellenwickelmatte zusammenzudrücken.

Die Erfindung wird nachfolgend anhand der Figuren 1 - 7 näher erläutert:
- Figur 1: - zeigt eine Draufsicht auf eine Wellenwickelmatte,
- Figur 2: - zeigt eine Ausschnittvergrößerung der in Figur 1 gezeigten, noch nicht mit Isolationselementen bestückten Wellenwickelmatte,
- Figur 3: - zeigt eine Draufsicht auf eine Wellenwickelmatte, die teilweise mit Isolationselementen bestückt ist,
- Figur 4: - zeigt eine Ausschnittvergrößerung der in Figur 3 gezeigten, teilweise mit Isolationselementen bestückten Wellenwickelmatte,
- Figur 5: - zeigt eine perspektivische Darstellung einer Wellenwickelmatte während des Spreizvorgangs,
- Figur 6: - zeigt eine Draufsicht auf eine Wellenwickelmatte, die vollständig mit Isolationselementen bestückt ist,
- Figur 7: - zeigt eine schematische Darstellung einer erfindungsgemäßen Vorrichtung.

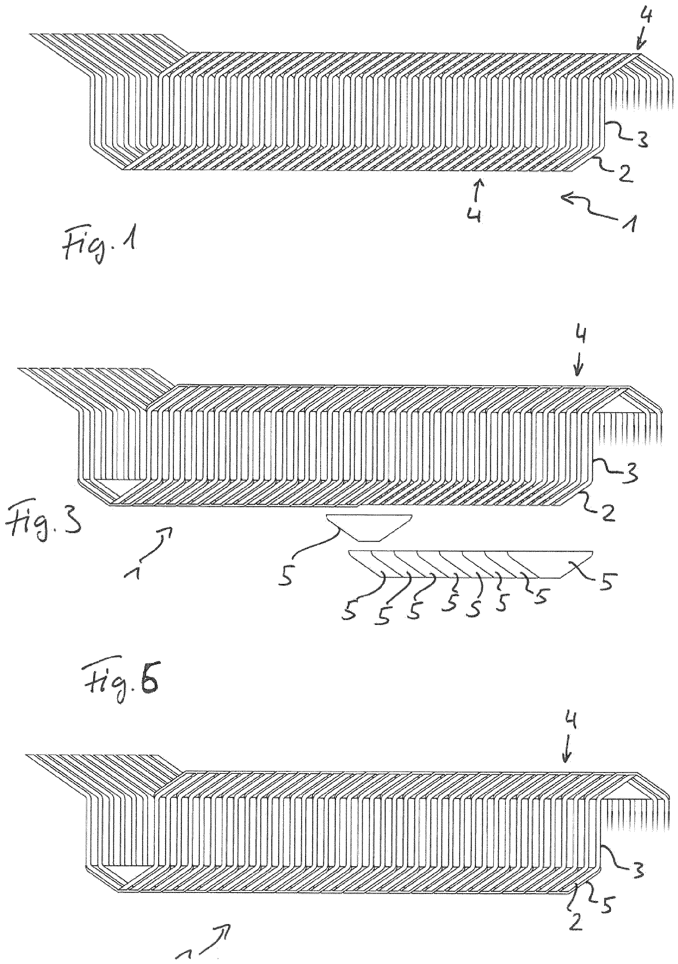

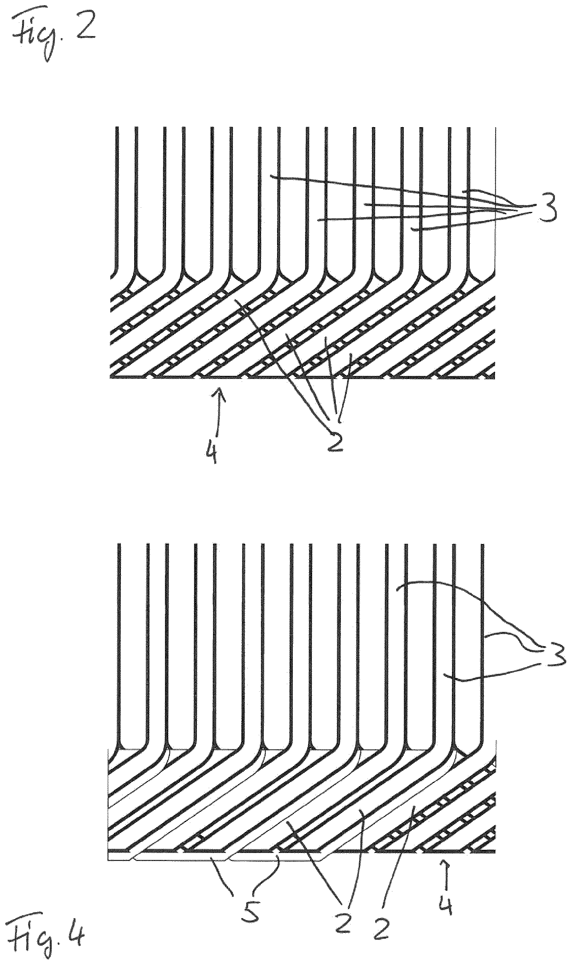

Die in Figur 1 gezeigte Wellenwickelmatte 1 weist eine Mehrzahl übereinander angeordnete Wellenwicklungen auf. Diese bestehen jeweils aus einem gebogenen Draht, der zu einer Welle geformt ist, die in der Zeichnung im Wesentlichen vertikal verlaufende Mittelabschnitte 3 und davon abgekantete oder abgebogene Bereiche 2 aufweist. Die abgebogenen Bereiche 2 bilden dann entsprechende Kopfabschnitte 4 der Wellenwickelmatte 1. Die Situation ist in der Figur 2 noch etwas genauer gezeigt, man sieht hier, dass die einzelnen Wellenwicklungen übereinander angeordnet sind.

In Figuren 3 und 4 ist eine Wellenwickelmatte 1 dargestellt, bei der nach dem erfindungsgemäßen Verfahren Isolationselemente 5 eingebracht sind. Wie man in den Zeichnungen erkennt, sind die Isolationselemente 5 zwischen die einzelnen Kopfabschnitte 4 der Wellenwickelmatte 1 eingebracht.

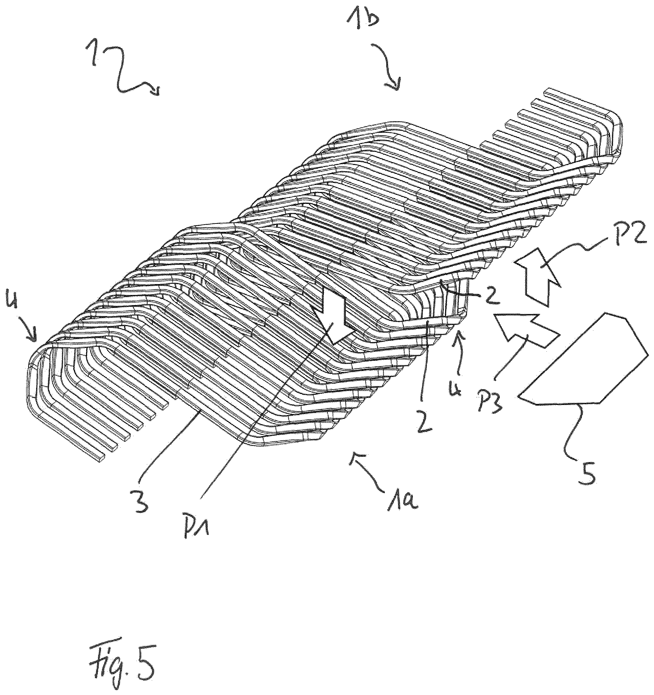

Dazu wird, wie dies in Figur 5 dargestellt ist, die Wellenwickelmatte 1 vor dem Einbringen gespreizt. Benachbarte Wicklungen oder Kopfabschnitte 4 werden dabei auseinander bewegt. Im gezeigten Beispiel wird der Abschnitt 1a in Richtung des Pfeils P1 in der Zeichnung nach unten und der Abschnitt 1b in der Zeichnung nach oben, Pfeil P2 gedrückt, und zwischen die beiden so gespreizten Kopfabschnitte 4 - hier angedeutet durch die mit 2 bezeichneten Drahtabschnitte - das Isolationselement 5 durch Zustellen desselben in Richtung P3 eingebracht. Anschließend wird die Spreizung aufgehoben, und die Matte 1 kehrt aufgrund der Eigenspannung wieder in die Ausgangssituation zurück, wie sie in den Figuren 1, 3 und 6 gezeigt ist. Figur 6 zeigt eine auf diese Weise fertig gestellte Wellenwickelmatte 1, bei der auf beiden Seiten die Wickelkopfabschnitte 4 jeweils mit einem Isolationselement 5 versehen sind. Als Isolationselemente kommen bevorzugt flache isolierende Materialien, wie zum Beispiel Papier oder Folie aus Kunststoff, in Betracht. Diese Isolationselemente 5 können bevorzugt selbstklebend ausgebildet sein, natürlich ist auch denkbar, den Klebstoff separat aufzutragen oder lediglich mit der Eigenspannung der Wellenwickelmatte 1 die Isolationselemente 5 kraftschlüssig festzuhalten.

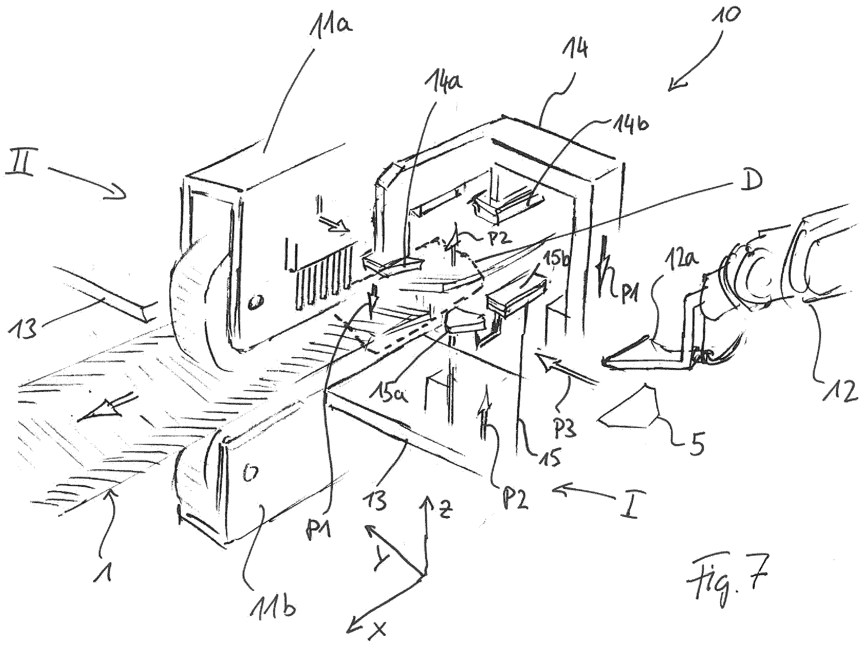

In Figur 7 ist eine beispielhafte Vorrichtung 10 zur Durchführung des erfindungsgemäßen Verfahrens gezeigt. Die Wellenwickelmatte 1 wird dabei in einer Transportrichtung X vorgeschoben, wobei eine Transportvorrichtung 11a, 11b für den Vorschub sorgt. Die Transportvorrichtung 11a, 11b kann auf unterschiedliche Weise ausgebildet sein, wichtig ist lediglich, dass sie einen Vorschub der Wellenwickelmatte 1 in Transportrichtung X bewirkt. Im gezeigten Beispiel ist die Transportvorrichtung 11a, 11b mit Zahnriemen bestückt, die im Mittelteil der Wellenwickelmatte 1 angreifen und diese vorschieben.

I und II bezeichnen die beiden Längsseiten der Wellenwickelmatte 1. Auf der Seite I ist eine Anordnung zum Einbringen von Isolationselementen 5 in die Wellenwickelmatte 1 gezeigt; eine solche kann teilweise oder identisch zu der auf der Seite I gezeigten Anordnung auch (zusätzlich) auf der Seite II angeordnet sein. 13 bezeichnet eine seitliche Führung für die Wellenwickelmatte in dem hier zu betrachtenden Bereich.

Es wird nun die auf der Seite I gezeigte Anordnung näher erläutert, wobei darauf hingewiesen wird, dass die Beschreibung entsprechend auch für eine Anordnung gilt, die auf Seite II angeordnet sein kann, in der Zeichnung aber aus Gründen der Einfachheit nicht weiter dargestellt ist.

Die transportierte Wellenwickelmatte 1 wird im Bereich D (dieser entspricht etwa dem Ausschnitt, der in der Figur 5 gezeigt ist) mit Isolationselementen 5 bestückt. Dazu gibt es eine Einrichtung 14, 15, die insbesondere Abschnitte 14a und 15a umfasst. Diese Abschnitte 14a und 15a sind dazu ausgelegt, Teile im Bereich der Kopfabschnitte der Wellenwickelmatte zu greifen und in Richtung P1 nach unten bzw. Richtung P2 nach oben zu bewegen. Die Richtungen P1 und P2 erfolgen bevorzugt in einer Vertikalrichtung Z senkrecht zur Transportrichtung X der Wellenwickelmatte und auch senkrecht zur Breitenrichtung bzw. Querrichtung Y der Wellenwickelmatte 1.

Die Elemente 14a und 15a sind im gezeigten Beispiel als stempelartige Anlageflächen ausgebildet, die dazu ausgelegt sind, die Wellenwickelmatte 1 im Bereich D durch Anlage und Drücken gegen diese zu spreizen. Zum Einbringen des Isolationselements 5 ist eine entsprechende Einbringeinrichtung 12 vorgesehen, die bevorzugt einen Abschnitt 12a aufweist, der als Greifer ausgebildet sein kann, um ein Isolationselement 5 entsprechend festzuhalten. Die Einbringeinrichtung 12 ist zumindest dazu geeignet, einen Vorschub in Querrichtung Y (angedeutet durch den Pfeil P3), also in Richtung der Wellenwickelmatte 1, durchzuführen, um das Isolationselement 5 in den gespreizten Bereich D zwischen zwei benachbarten Wickelkopfabschnitten einzubringen.

Weiter sind an der Einrichtung 14, 15 bzw. auch durchaus separat dazu und unabhängig hiervon steuerbare Pressabschnitte 14b und 15b einer Presseinrichtung vorgesehen. Dabei handelt es sich bevorzugt um Ausleger, die gemeinsam mit den als Spreizbacken ausgebildeten Elementen 14a und 15a gegen die Wellenwickelmatte 1 gefahren werden, wenn die Spreizung erfolgt. Während also diese Spreizbacken die Wellenwickelmatte 1 auseinander drücken, wird mit den Elementen 14b und 15b die bereits mit Isolationselementen 5 bestückte Wellenwickelmatte 1, bevorzugt nacheilend, zusammengedrückt. Dies geschieht vor allem, um ein sicheres Verkleben oder Einformen der Isolationselemente 5 in der Wellenwickelmatte 1 sicherzustellen.

Diese Funktion kann - wie oben erwähnt - in Form einer selbständigen Funktionseinheit vorgesehen sein.

Durch wiederholtes Spreizen der Wellenwickelmatte 1 in der geschilderten Form auf beiden Seiten I bzw. II wird der gesamte Strang der Wellenwickelmatte 1 mit entsprechenden Isolationselementen 5 versehen und so eine vollständige Wickelkopfisolation in automatisierter Form erreicht.

## Patentansprüche

1. Verfahren zum Isolieren der Wickelköpfe (4) einer Wellenwickelmatte (1), bei welchem eine Wellenwickelmatte (1) mit einer Mehrzahl durch Umbiegen von Wickeldrähten (2, 3) erzeugten Wickelkopfabschnitten (4) bereitgestellt wird und die Wickelkopfabschnitte (4) durch Aufbringen eines Isolationselements (5), insbesondere eines Isolationspapiers oder einer Isolationsfolie oder eines bandförmigen Isolationselements, auf die Wickelkopfabschnitte (4) gegeneinander isoliert werden,
**gekennzeichnet durch** folgende Schritte:
i) Transportieren der Wellenwickelmatte (1) in einer Transportrichtung (X),
ii) relatives Auseinanderbringen von zumindest benachbarten Wickelkopfabschnitten (4) der Wellenwickelmatte (1),
iii) Einbringen eines Isolationselements (5) zwischen die auseinandergebrachten Wickelkopfabschnitte (4),
iv) wieder Zusammenbringen der auseinander gebrachten Wickelkopfabschnitte (4).

2. Verfahren nach Anspruch 1,
**dadurch gekennzeichnet,**
**dass** das Auseinanderbringen der Wickelkopfabschnitte gemäß ii) durch Spreizen der Wellenwickelmatte (4), insbesondere in einer Spreizrichtung (Z) senkrecht zur Transportrichtung (X), erfolgt.

3. Verfahren nach einem der vorigen Ansprüche,
**dadurch gekennzeichnet,**
**dass** das Isolationselement (5) auf einen Wickelkopfabschnitt (4) aufgebracht, insbesondere aufgeklebt, wird.

4. Verfahren nach einem der vorigen Ansprüche,
**dadurch gekennzeichnet,**
**dass** das Isolationselement (5) der Form des Wickelkopfabschnitts (4) nachempfunden und/oder bandförmig ausgebildet ist.

5. Verfahren nach einem der vorigen Ansprüche,
**dadurch gekennzeichnet,**
**dass** das Isolationselement (5) selbstklebend ausgebildet ist.

6. Verfahren nach einem der vorigen Ansprüche,
**dadurch gekennzeichnet,**
**dass** die Schritte ii) bis iv) auf beiden in Transportrichtung (X) verlaufenden Längsseiten (I, II) der Wellenwickelmatte durchgeführt werden.

7. Verfahren nach einem der vorigen Ansprüche,
**dadurch gekennzeichnet,**
**dass** die Schritte ii) bis iv) wiederholt ausgeführt werden.

8. Verfahren nach einem der vorigen Ansprüche,
**dadurch gekennzeichnet,**
**dass** die Wellenwickelmatte (1) in wenigstens einem Bereich zusammengedrückt wird, der bereits die Schritte ii) bis iv) durchlaufen oder noch nicht durchlaufen hat.

9. Vorrichtung (10) zur Durchführung eines Verfahrens zum Isolieren der Wickelköpfe (4) einer Wellenwickelmatte (1) nach einem der vorigen Ansprüche, aufweisend
a) eine Transportvorrichtung (11a, 11b), die eine Wellenwickelmatte (1) in einer Transportrichtung (X) transportiert,
b) eine Spreizeinrichtung (14a, 15a), die dazu ausgelegt ist, zumindest benachbarte Wickelkopfabschnitte (4) der Wellenwickelmatte (1) relativ zueinander zu bewegen und auseinanderzubringen,
c) eine Einbringeinrichtung (12, 12a), die dazu ausgelegt ist, ein Isolationselement (5) zu greifen und in einen Bereich zwischen den durch die Spreizeinrichtung auseinandergebrachten Wickelabschnitten (4) einzubringen.

10. Vorrichtung nach Anspruch 9,
**dadurch gekennzeichnet,**
**dass** sie zwei Spreizeinrichtungen (14a, 15a) gemäß Merkmal b) umfasst, wobei die erste Spreizeinrichtung auf der einen Seite (I) der Transportvorrichtung (11a, 11b) und die zweite Spreizeinrichtung (14a, 15a) auf gegenüberliegenden Seite (II) der Transportvorrichtung (11a, 11b) angeordnet ist.

11. Vorrichtung nach Anspruch 9 oder 10,
**dadurch gekennzeichnet,**
**dass** sie zwei Einbringeinrichtungen (12, 12a) gemäß Merkmal c) umfasst, wobei die erste Einbringeinrichtung (12, 12a) auf der einen Seite (I) der Transportvorrichtung (11a, 11b) und die zweite Einbringeinrichtung (12, 12a) auf der gegenüberliegenden Seite (II) der Transportvorrichtung (11a, 11b) angeordnet ist.

12. Vorrichtung nach einem der Ansprüche 9 bis 11,
**dadurch gekennzeichnet,**
**dass** die bzw. jede Einbringeinrichtung (12, 12a) zumindest in einer Richtung (Y) quer zur Transportrichtung (X) in den Bereich der Wellenwickelmatte (1) zustellbar ist.

13. Vorrichtung nach einem der Ansprüche 9 bis 12,
**dadurch gekennzeichnet,**
**dass** sie wenigstens eine Presseinrichtung (14b, 15b), bevorzugt je eine Presseinrichtung auf jeder Seite der Transporteinrichtung (11a, 11b) umfasst, wobei die mindestens eine Presseinrichtung (14b, 15b) dazu ausgelegt ist, die Wellenwickelmatte (1) zusammenzudrücken.

## Claims

1. Method for insulating the end windings (4) of a wave winding mat (1), in which a wave winding mat (1) is produced with a plurality of end winding portions (4) made by bending round winding wires (2, 3) and the end winding portions (4) are insulated from one another by applying an insulating element (5), in particular an insulating paper or an insulating foil or a strip-like insulating element, to the end winding portions (4)
**characterised by** the following steps:
(i) transporting the wave winding mat (1) in a transport direction (X),
ii) moving the at least adjacent end winding portions (4) of the wave winding mat (1) relatively apart from one another;
iii) introducing an insulating element (5) between the end winding portions which have been moved apart;
iv) b ringing back together again the end winding portions (4) which were moved apart from one another.

2. Method according to claim 1
**characterised in that**
moving the end winding portions apart according to ii) is carried out by spreading the wave winding mat (4), in particular in a spreading direction (Z) perpendicular to the transport direction (X).

3. Method according to one of the preceding claims
**characterised in that**
the insulating element (5) is applied, more particularly glued, onto an end winding portion (4).

4. Method according to one of the preceding claims
**characterised in that**
the insulating element (5) is designed to the imitate the end winding portion (4) and/or is of a strip-like configuration.

5. Method according to one of the preceding claims
**characterised in that**
the insulating element (5) is of a self-adhesive design.

6. Method according to one of the preceding claims
**characterised in that**
the steps ii) to iv) are carried out on both longitudinal sides (I, II) of the wave winding mat running in the transport direction (X).

7. Method according to one of the preceding claims
**characterised in that**
the steps ii) to iv) are undertaken repeatedly.

8. Method according to one of the preceding claims
**characterised in that**
the wave winding mat (1) is compressed in at least one region which has already run through or has not yet run through steps ii) to iv).

9. Device (10) for carrying out a method for insulating the end windings (4) of a wave winding mat (1) according to one of the preceding claims, having
a) a transport device (11a, 11b) which transports a wave winding mat (21) in a transport direction (X),
b) a spreading device (14a, 15a) which is designed to move at least adjoining end winding portions (4) of the wave winding mat (1) relative to one another and to bring them apart from one another,
c) an insert device (12, 12a) which is designed to grip an insulating element (5) and to introduce it into a region between the winding portions (4) which are spread apart by the spreading device.

10. Device according to claim 9
**characterised in that**
it comprises two spreading devices (14a, 15a) according to feature b) wherein the first spreading device is arranged on one side (I) of the transport device (11a, 11b) and the second spreading device (14a, 15a) is arranged on the opposite side (II) of the transport device (11a, 11b).

11. Device according to claim 9 to 10
**characterised in that**
it comprises two insert devices (12, 12a) according to feature c) wherein the first insert device (12, 12a) is arranged on one side (I) of the transport device (11a, 11b) and the second insert device (12, 12a) is arranged on the opposite side (II) of the transport device (11a, 11b).

12. Device according to one of claims 9 to 11
**characterised in that**
the or each insert device (12, 12a) can be delivered at least in one direction (Y) transversely to the transport direction (X) into the region of the wave winding mat (1).

13. Device according to one of claims 9 to 12
**characterised in that**
it comprises at least one pressing device (14b, 15b), preferably one pressing device on each side of the transport device (11a, 11b) wherein the at least one pressing device (14b, 15b) is designed to compress the wave winding mat (1)

## Revendications

1. Procédé d'isolation des têtes de bobinage (4) d'une natte de bobinage (1), dans lequel une natte de bobinage (1) comprenant une pluralité de sections de têtes de bobinage (4), obtenues par pliage de fils de bobinage (2, 3) est mise à disposition et les sections de têtes de bobinage (4) sont isolées les unes par rapport aux autres par l'application sur les sections de têtes de bobinage (4) d'un élément d'isolation (5), en particulier d'un papier isolant ou d'une feuille isolante ou d'un élément d'isolation en forme de bande (4), **caractérisé par** les étapes suivantes:
i) transport de la natte de bobinage (1) dans une di rection de transport (X),
ii) écartement par rapport les unes aux autres d'au moins les sections de têtes de bobinage (4) de la natte de bobinage (1) voisines,
iii) application d'un élément d'isolation (5) entre les sections de têtes de bobinage (4) écartées,
iv) ré-approchement des sections de têtes de bobinage (4) écartées.

2. Procédé selon la revendication 1,
**caractérisé en ce que**
l'écartement des parties de têtes de bobinage selon ii) est effectué par déploiement de la natte de bobinage (4), en particulier dans une direction de déploiement (Z), perpendiculairement à la direction de transport (X) .

3. Procédé selon l'une des revendications précédentes,
**caractérisé en ce que**
l'élément d'isolation (5) est appliqué sur une section de tête de bobinage (4), en particulier collé.

4. Procédé selon l'une des revendications précédentes,
**caractérisé en ce que**
l'élément d'isolation (5) présente une forme analogue à celle de la section de la tête de bobinage (4) et / ou la forme d'une bande.

5. Procédé selon l'une des revendications précédentes,
**caractérisé en ce que**
l'élément d'isolation (5) est de conception auto-adhésive.

6. Procédé selon l'une des revendications précédentes,
**caractérisé en ce que**
les étapes ii) à iv) sont exécutées sur les deux côtés longitudinaux (I, II) de la natte de bobinage, qui s'étendent dans la direction de transport (X).

7. Procédé selon l'une des revendications précédentes,
**caractérisé en ce que**
les étapes ii) à iv) sont exécutées à plusieurs reprises.

8. Procédé selon l'une des revendications précédentes,
**caractérisé en ce que**
la natte de bobinage (1) est compressé dans au moins une partie qui a déjà passé les étapes ii) à iv) ou ne les a pas encore passé.

9. Dispositif (10) destiné l'exécution d'un procédé d'isolation de têtes de bobinage (4) d'une natte de bobinage (1) selon l'une des revendications précédentes, lequel présente
a) un dispositif de transport (11a, 11b)), qui transporte une natte de bobinage (1) dans une direction de transport (X),
b) un dispositif d'écartement (14a, 15a), qui est apte à déplacer au moins les sections de têtes de bobinage (4) de la natte de bobinage (1) voisines, les unes par rapport aux autres, et de les écarter les unes des autres,
c) un dispositif d'apport (12, 12a) qui est conçu pour saisir un élément d'isolation (5) et pour le placer dans un espace compris entre les sections de têtes de bobinage (4) écartées les unes des autres par le dispositif d'écartement.

10. Dispositif selon la revendication 9,
**caractérisé en ce**
**qu'**il comprend deux dispositifs d'écartement (14a, 15a) selon la caractéristique b), sachant que le premier dispositif d'écartement est disposé sur un côté (I) du dispositif de transport (11a, 11b)) et le deuxième dispositif d'écartement (14a, 15a) sur le côté (II) du dispositif de transport (11a, 11b)) opposé.

11. Dispositif selon l'une des revendications 9 ou 10,
**caractérisé en ce**
**qu'**il comprend deux dispositifs d'apport (12, 12a), sachant que le premier dispositif d'apport (12, 12a) est disposé sur un côté (I) du dispositif de transport (11a, 11b)) et le deuxième dispositif d'apport (12, 12a) sur le côté (II) du dispositif de transport (11a, 1b)) opposé.

12. Dispositif selon l'une des revendications 9 à 11,
**caractérisé en ce que**
le ou chaque dispositif d'apport (12, 12a) peut être amené dans la zone de la natte de bobinage (1) au moins dans une direction (Y) transversale par rapport à la direction de transport (X).

13. Dispositif selon l'une des revendications 9 à 12,
**caractérisé en ce**
**qu'**il comprend au moins un dispositif de pression (14b, 15b), de préférence dispositif de pression sur chacun des côtés du dispositif de transport (11a, 11b), sachant que l'au moins un dispositif de pression (14b, 15b) est apte à compresser la natte de bobinage (1).
